# EUROPÄISCHE PATENTSCHRIFT

(11) **EP 1 899 611 B1**
(45) Veröffentlichungstag und Bekanntmachung des Hinweises auf die Patenterteilung: **30.09.2009**
(21) Anmeldenummer: 06762222.5
(22) Anmeldetag: 28.06.2006
(51) Int. Cl.: F15B 15/14

(54) **KOLBEN FÜR EINEN ARBEITSZYLINDER**
PISTON FOR A WORKING CYLINDER
PISTON POUR UN VÉRIN

(30) Priorität: 06.07.2005 DE 202005010618 U
(43) Veröffentlichungstag der Anmeldung: 19.03.2008
(73) Patentinhaber: FESTO AG & Co. KG, 73734 Esslingen (DE)
(72) Erfinder: KEES, Ulrich, 66424 Homburg (DE); RÖHRIG, Harald, 66583 Spiesen-Elversberg (DE)
(74) Vertreter: Abel, Martin
(86) Internationale Anmeldenummer: PCT/EP2006/006224
(87) Internationale Veröffentlichungsnummer: WO 2007/003311

(56) Entgegenhaltungen:
- EP-A- 0 036 538
- EP-B1- 0 093 859
- DE-A1- 3 404 095
- DE-A1- 3 508 686
- DE-A1- 10 334 205
- DE-A1- 19 715 858
- GB-A- 629 685
- US-A- 2 470 541
- US-A- 4 281 590

## Beschreibung

Die Erfindung betrifft einen Kolben für einen Arbeitszylinder, mit zwei zueinander koaxialen, gemeinsam einen Metallkern umschließenden und wenigstens teilweise aus Kunststoffmaterial bestehenden Kolbenelementen, von denen wenigstens eines eine radial außen angeordnete ringförmige Kolbendichtung aufweist.

Ein aus der DE 34 04 095 A1 bekannter Kolben dieser Art besitzt zwei Kolbenhalbteile, die jeweils aus einer metallischen Einlage und einem darauf aufgespritzten Hüllkörper bestehen. Zur Montage des Kolbens werden die Kolbenhalbteile axial hintereinander auf einen Zapfen einer Kolbenstange aufgefädelt und mittels einer auf die Kolbenstange aufgeschraubten Gewindebuchse gegeneinander verspannt. An der Berührfläche können zusätzlich als Rastmittel bezeichnete Elemente vorhanden sein, die ineinander eingreifen, um die Kolbenhalbteile relativ zueinander unverdrehbar zu fixieren. Da der Kolben erst beim Aufsetzen auf die Kolbenstange zusammengebaut wird, ist seine Handhabung relativ umständlich und die automatisierte Montage eines mit dem Kolben auszustattenden Arbeitszylinders stark erschwert.

Eine vergleichbare Situation stellt sich bei dem in der DE 35 08 686 C2 beschriebenen Kolben ein, dessen Aufbau grundsätzlich dem in der DE 34 04 095 A1 beschriebenen entspricht.

Die DE 197 15 858 C2 offenbart einen aus zwei separaten Kolbenteilen zusammengesetzten Kolben. Die Kolbenteile werden aber auch hier erst beim Aufsetzen auf die Kolbenstange miteinander vereinigt. Jedes Kolbenteil besitzt eine aus Metall bestehende dünnwandige Tragscheibe, an die ein als Kolbendichtung fungierender Elastikkörper angeformt ist.

Ein als Baueinheit ausgeführter Kolben geht aus der EP 0 093 859 B1 hervor. Der Kolben besitzt dort eine axial zwischen zwei Profilscheiben angeordnete Hülse, wobei um die Hülse herum ein Ringmagnet angeordnet ist und wobei die Gesamtheit der Teile mittels eines Dichtungswerkstoffes vollständig umspritzt oder umpresst ist. Ein solcher Kolben hat den Nachteil einer relativ aufwändigen Herstellung und Montage. Vor dem Umspritzen mit dem Dichtungswerkstoff müssen die einzelnen Teile ausgerichtet werden, was relativ zeitaufwändig ist.

Aus der DE 103 34 205 A1 ist ein Kolben bekannt, der einen auf einem Metallkern sitzenden einteiligen Kolbenkörper aufweist.

Ein in der US 2,470,541 beschriebener Kolben enthält einen Kolbenkörper, auf den Dichtungsringe aufgesteckt und mittels segmentierter Endplatten fixiert sind.

Die US 4,281,590 offenbart einen Pumpenkolben mit einem einteiligen Kolbenkörper, auf den zwei ringförmige Dichtungseinrichtungen aufgesetzt sind, die sich jeweils aus einem Elastomerkörper und einem Antiextrusionselement zusammensetzen.

In der GB 629,685 ist ein mehrteiliger Kolben beschrieben, dessen Kolbenelemente miteinander verschraubt sind.

Es die Aufgabe der vorliegenden Erfindung, einen aus wenigen Teilen bestehenden, bei flexibler Montagemöglichkeit einfach und kostengünstig herstellbaren Kolben für einen Arbeitszylinder vorzuschlagen.

Zur Lösung dieser Aufgabe ist bei einem Arbeitszylinder der eingangs genannten Art vorgesehen, dass die beiden Kolbenelemente mittels einer an ihnen jeweils vorgesehenen Verrastungseinrichtung unabhängig voneinander von entgegengesetzten Seiten her koaxial auf den Metallkern aufgerastet sind, wobei durch jede der beiden Verrastungseinrichtungen der gesamte Metallkern am jeweiligen Kolbenelement gehalten ist, so dass die Kolbenelemente durch den Metallkern als Verbindungsglied axial zusammengehalten werden.

Der zusammengebaute Kolben ist somit eine aus sich heraus zusammenhaltende Baugruppe. Der Kolben kann also schon vor der kolbenstangenseitigen Montage fertiggestellt werden und lässt sich anschließend als Einheit an einer Kolbenstange fixieren. Als Verbindungsglied für die beiden wenigstens teilweise aus Kunststoffmaterial bestehenden Kolbenelemente dient ein Metallkern, an dem die beiden Kolbenelemente unabhängig voneinander durch Verrastung fixiert sind, wobei keine zusätzlichen Spannelemente erforderlich sind, um die diversen Kolbenkomponenten axial zusammenzuhalten. Bei Bedarf kann bei der Montage eines Kolbens zunächst der gesamte Metallkern an einem der Kolbenelemente durch Verrastung fixiert werden, wobei durch die Verrastung ein verliersicherer Zusammenhalt gegeben ist, der die Handhabung bis zur Vereinigung mit dem zweiten Kolbenelement sehr vereinfacht. Sofern gewünscht, kann auf der Basis des erfindungsgemäßen Prinzips ein Baukastensystem zur Herstellung von Kolben realisiert werden, wobei man unterschiedliche Kolbenelemente bereitstellt, die man dann von Fall zu Fall selektiv unter Vermittlung des Verbindungsgliedes zu dem gewünschten Kolben kombiniert. Die Kolbenelemente können sich beispielsweise in ihrem Werkstoff unterscheiden oder auch in der Ausgestaltung der Kolbendichtung. Jedenfalls lässt sich mit dem erfindungsgemäßen Aufbau eine äußerst flexible und rationelle Kolbenfertigung realisieren.

Vorteilhafte Weiterbildungen der Erfindung gehen aus den Unteransprüchen hervor.

Je nach Einsatzfall kann lediglich ein Kolbenelement oder können beide Kolbenelemente mit einer Kolbendichtung ausgestattet sein, die beim späteren Einsatz mit der Kolbenlauffläche des Gehäuses eines Arbeitszylinders zusammenarbeitet. Ist eine jeweilige Kolbendichtung für eine Abdichtung in einer Richtung ausgelegt, kann auf diese Weise sehr flexibel ein Kolben für wahlweise einen einfachwirkenden oder einen doppeltwirkenden Einsatz bereitgestellt werden.

Bei beiden Kolbenelementen ist die Verrastungseinrichtung jeweils zweckmäßigerweise einstückig an einem aus Kunststoffmaterial bestehenden scheibenförmigen Grundkörper ausgebildet, der auch die mindestens eine Kolbendichtung trägt, welche vorzugsweise durch Spritzgießen an den Grundkörper angeformt ist. Grundkörper und Kolbendichtung sind bevorzugt als ZweiKomponenten-Spritzgussteil realisiert, was eine äußerst rationelle Fertigung zulässt.

Zweckmäßigerweise ist zwischen den beiden Kolbenelementen ein den Metallkern konzentrisch umgebender ringförmiger Aufnahmeraum definiert. Ist der Kolben für einen Arbeitszylinder gedacht, der die Möglichkeit einer Erfassung der Kolbenposition vorsieht, sitzt in dem ringförmigen Aufnahmeraum ein auch als Ringmagnet bezeichenbarer permanentmagnetischer Ringkörper, der als Betätigungsglied für eine am Zylindergehäuse angeordnete Sensoreinrichtung dient. Ist eine Positionserfassung des Kolbens nicht beabsichtigt, kann zur Reduzierung der Herstellkosten anstelle des permanentmagnetischen Ringkörpers ein beispielsweise aus Kunststoffmaterial bestehender unmagnetischer Ringkörper eingesetzt sein, um eine hohe Stabilität des Kolbens zu gewährleisten. Ist ein Ringmagnet eingesetzt, übernimmt dieser gleichzeitig eine festigkeitssteigernde Stabilisierungsfunktion.

Es ist von Vorteil, wenn der permanentmagnetische Ringkörper axial spielfrei und stoßunempfindlich zwischen den beiden Kolbenelementen gehalten ist. Um dies zu begünstigen, sind an den einander axial zugewandten Grundflächen zweier an den Grundkörpern zur Aufnahme des Ringkörpers vorgesehener Ringnuten mehrere in Umfangsrichtung verteilte gummielastische Pufferelemente vorgesehen, die geringfügig axial in die Ringnut hineinragen. Sie dienen zur elastischen Einspannung des Ringkörpers, wobei sie zweckmäßigerweise jeweils mit der am gleichen Grundkörper angeordneten Kolbendichtung einstückig ausgebildet sind und axiale Kanäle des Grundkörpers durchsetzen. Sie können beim Anformen der Kolbendichtung direkt mit ausgebildet werden.

Die zur kernseitigen Fixierung der Kolbenelemente dienenden Verrastungseinrichtungen enthalten vorzugsweise jeweils mehrere um das Zentrum des zugeordneten Kolbenelementes herum verteilte, in Richtung zum jeweils anderen Kolbenelement axial vorstehende Rasthaken, die jeweils einen Abschnitt des Metallkerns axial hintergreifen. Vorzugsweise sind die Rasthaken zur Ausübung einer Schnappfunktion ausgelegt, so dass sie selbsttätig auf den Metallkern aufschnappen, wenn Metallkern und Kolbenelement axial zusammengedrückt werden.

Der Metallkern lässt sich relativ einfach konzipieren, wenn er von den Rasthaken radial außen umgriffen wird. Hierbei kann der Metallkern entlang seines Außenumfanges verteilte radiale Aussparungen aufweisen, die von den Rasthaken durchgriffen werden. Auf diese Weise kann gleichzeitig eine in der Umfangsrichtung des Metallkerns formschlüssige Verbindung zwischen diesem und dem jeweiligen Kolbenelement erreicht werden und daraus resultierend eine verdrehgesicherte Verbindung zwischen dem Metallkern und den Kolbenelementen.

Um einen axial besonders kurzbauenden Kolben zu erhalten, sind die Rasthaken der beiden Verrastungseinrichtungen zweckmäßigerweise in der Kolbenumfangsrichtung versetzt zueinander angeordnet. Der Metallkern kann durch die Rasthaken der beiderseitigen Kolbenelemente insbesondere in abwechselnder Reihenfolge umgriffen sein.

Bevorzugt ist der Metallkern zentral mit einem Durchgangsloch versehen. Mit diesem kann er auf eine Kolbenstange aufgesteckt werden. Bevorzugt verfügt der Metallkern über einen zentral gelochten, scheibenförmigen Mittelabschnitt, der mit den beiden Verrastungseinrichtungen zusammenwirkt.

Eine besonders stabile Abstützung auf einer Kolbenstange ergibt sich, wenn der Metallkern koaxial beidseits vom Mittelabschnitt wegragende Buchsenabschnitte aufweist. Das Durchgangsloch des Metallkernes ist auf diese Weise relativ lang, woraus eine optimale kolbenstangenseitige Abstützung resultiert. Um gleichwohl die axialen Abmessungen des Kolbens so gering wie möglich halten zu können, verfügen die beiden Kolbenelemente zweckmäßigerweise über jeweils eine zentrale Durchbrechung, in die der zugeordnete Buchsenabschnitt koaxial eintauchen kann. Ist vorgesehen, den Kolben durch axiales Verspannen auf einer Kolbenstange zu fixieren, so ermöglicht diese Bauform ein Verspannen mit dem Metallkern im Bereich der beiden Buchsenabschnitte, bei gleichzeitig sehr geringer oder überhaupt keiner Beaufschlagung der Kolbenelemente selbst.

Der Metallkern lässt sich besonders einfach aus zwei koaxial aneinandergesetzten Kernelementen herstellen, die zweckmäßigerweise identisch gestaltet sind. Bevorzugt sind sie als Stanzbiegeteile realisiert.

Werden jeweils beide Kernelemente von der Verrastungseinrichtung eines jeweiligen Kolbenelementes umgriffen, kann in der Regel auf eine direkte Befestigung zwischen den beiden Kernelementen verzichtet werden. Allerdings ist es der Stabilität des Metallkernes förderlich und auch die Handhabung bei der Montage des Kolbens wird erleichtert, wenn die beiden Kernelemente fest und insbesondere unlösbar zu einer den Metallkern bildenden Baueinheit zusammengefügt sind. Hierzu ist insbesondere eine Schweißverbindung vorgesehen, beispielsweise durch mehrere entlang des Umfanges verteilte Schweißpunkte oder durch eine randseitige, ununterbrochen oder mit Unterbrechungen umlaufende Schweißnaht, insbesondere hergestellt durch Laserschweißen.

Um die Bereiche zwischen dem Metallkern und einem jeweiligen Kolbenelement abzudichten, ist zweckmäßigerweise an den einander axial zugewandten Innenflächen der Grundkörper jeweils eine gummielastische Dichtscheibe angeformt, die am Metallkern dichtend anliegt. Auf diese Weise kann auf gesondert einzulegende O-Ringe verzichtet werden. Bevorzugt wird die Dichtscheibe gleichzeitig mit der zugeordneten Kolbendichtung durch Spritzgießen angeformt, wobei die Materialien dieser beiden Komponenten durch mindestens einen Übertrittskanal einstückig miteinander verbunden sein können.

Nachfolgend wird die Erfindung anhand der beiliegenden Zeichnung näher erläutert. In dieser zeigen:

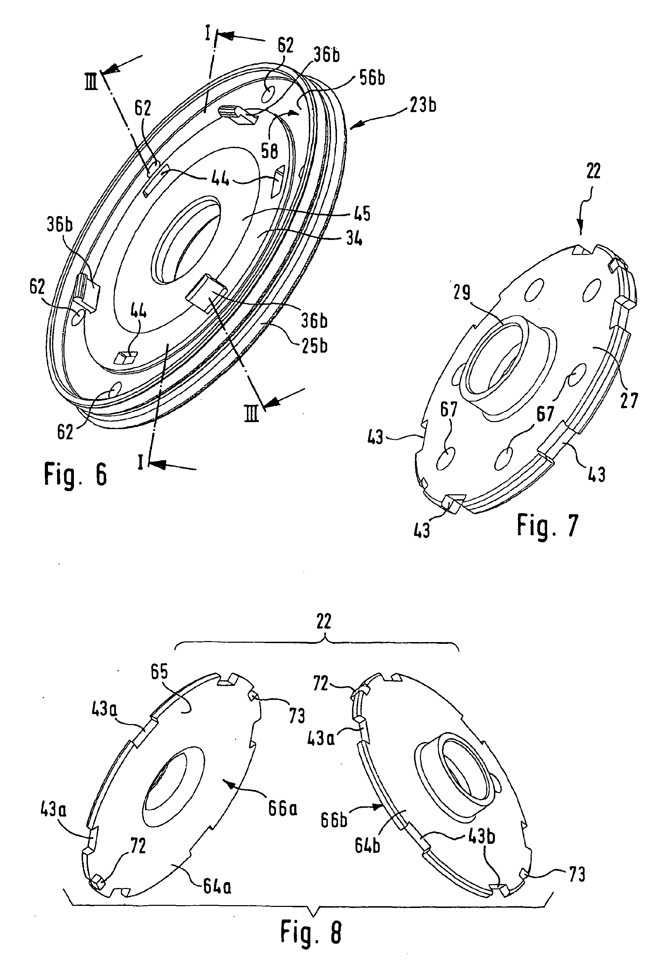

- Figur 1: eine bevorzugte Bauform des erfindungsgemäßen Kol- bens in einem Längsschnitt gemäß Schnittlinie I-I aus Figur 6 im auf einer Kolbenstange montierten Zustand, wobei strichpunktiert weitere Komponenten eines Arbeitszylinders angedeutet sind, der mit dem erfindungsgemäßen Kolben ausgestattet ist,

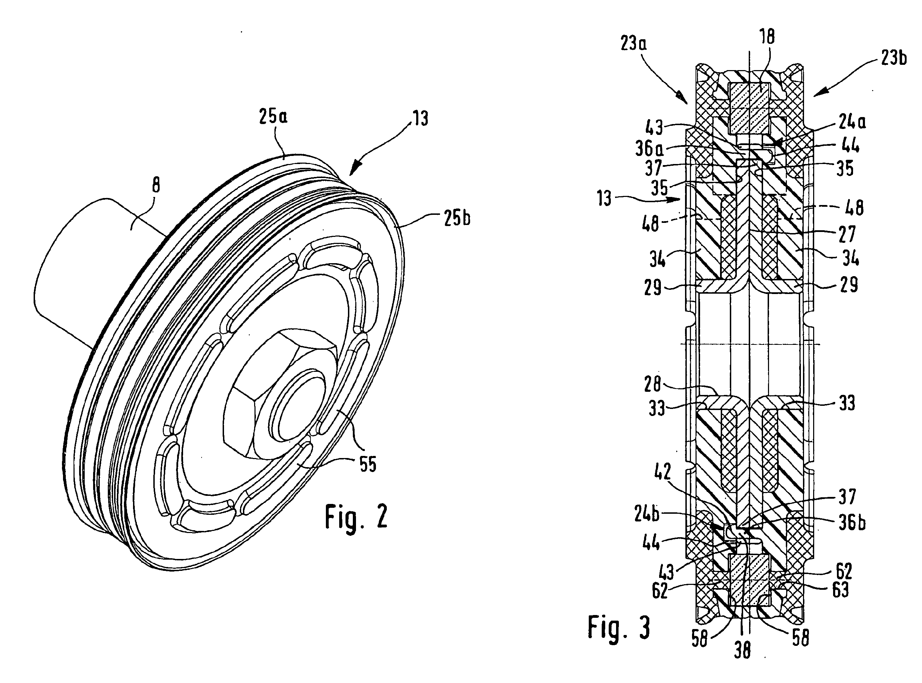

- Figur 2: eine perspektivische Einzeldarstellung des an der Kolbenstange befestigten Kolbens der Figur 1,
- Figur 3: einen weiteren Längsschnitt des Kolbens in einer bezüglich Figur 1 winkelmäßig versetzten Schnitt- ebene gemäß Schnittlinie III-III aus Figur 6,
- Figur 4: die Einzelteile des Kolbens vor dem Zusammenbau in einer Explosionsdarstellung im Längsschnitt,
- Figur 5: die in Figur 4 gezeigten Komponenten im hälftigen Längsschnitt in perspektivischer Darstellung,
- Figur 6: eines der beiden Kolbenelemente in einer perspekti- vischen Einzeldarstellung mit Blick auf die die Verankerungseinrichtung tragende axiale Innenflä- che,
- Figur 7: eine perspektivische Einzeldarstellung des beim Ausführungsbeispiel zweiteiligen Metallkerns, und
- Figur 8: die beiden Kernelemente des Metallkerns in einer Explosionsdarstellung vor dem Zusammenfügen.

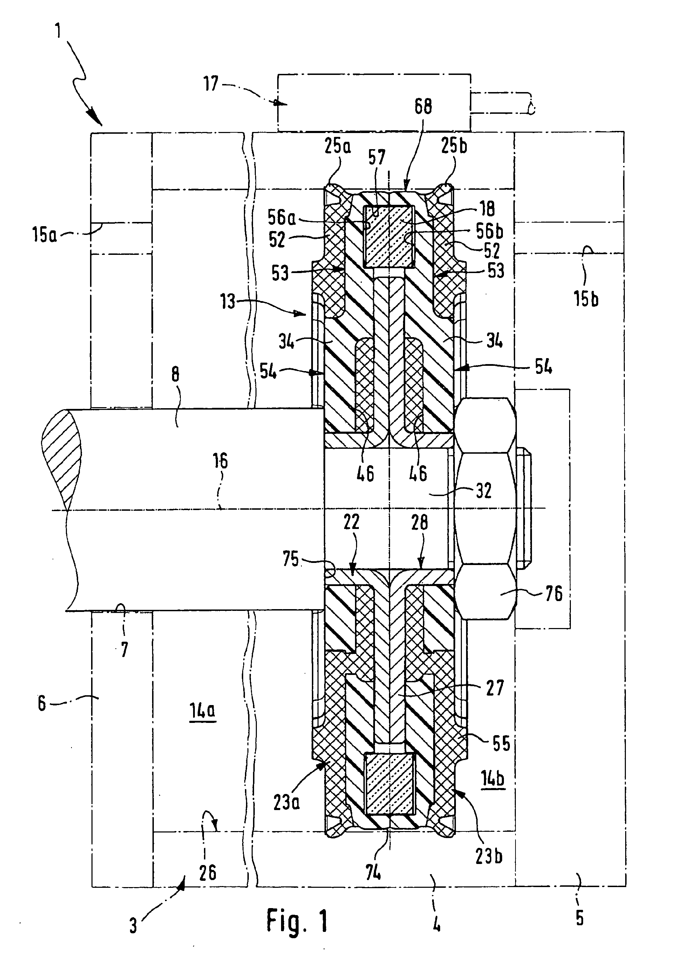

Die Figur 1 zeigt, teilweise nur schematisch und strichpunktiert, einen insgesamt mit Bezugsziffer 1 bezeichneten fluidbetätigten Arbeitszylinder. Er eignet sich insbesondere für einen Betrieb mit Druckluft, kann allerdings auch mit einem anderen gasförmigen Medium oder einem hydraulischen Medium angetrieben werden.

Der Arbeitszylinder 1 besitzt ein Zylindergehäuse 3 mit einem Zylinderrohr 4, das rückseitig durch einen Abschlussdeckel 5 und vorderseitig durch einen Lagerdeckel 6 abgeschlossen ist. Letzterer ist von einer zentralen Durchgangsöffnung 7 durchsetzt, in der nicht näher dargestellte Führungs- und Abdichtmittel angeordnet sind, die mit einer die Durchgangsöffnung 7 durchsetzenden Kolbenstange 8 führend und dichtend zusammenwirken. Auf dem im Innern des Zylindergehäuses 3 angeordneten Endabschnitt der Kolbenstange 8 ist ein Kolben 13 erfindungsgemäßer, bevorzugter Bauart befestigt, der den Innenraum des Zylindergehäuses 3 unter Abdichtung in zwei axial aufeinanderfolgende Zylinderkammern 14a, 14b unterteilt.

In jede Zylinderkammer 14a, 14b mündet ein eigener, das Zylindergehäuse 3 durchsetzender Fluidkanal 15a, 15b zur gesteuerten Fluidbeaufschlagung der zugeordneten Zylinderkammer 14a, 14b. Auf diese Weise kann der Kolben 13 in einer mit seiner Längsachse 16 gleichgerichteten Linearbewegung angetrieben und nach Bedarf positioniert werden. Die Bewegung und Position des Kolbens 13 kann außerhalb des Arbeitszylinders 1 an der Kolbenstange 8 abgegriffen werden.

Der Arbeitzylinder 1 kann mit strichpunktiert angedeuteten Sensormitteln 17 zur Positionserfassung des Kolbens 13 ausgestattet sein. Bei den Sensormitteln 17 handelt es sich beispielsweise um ein Wegmesssystem oder um einen oder mehrere Sensoren wie Hall-Sensoren oder Reed-Schalter. Die Sensormittel 17 sind außerhalb des Gehäuseinnenraumes gehäusefest fixiert, beispielsweise in einem Kanal oder einer Nut des Zylinderrohres 4. Die Aktivierung erfolgt über einen als Bestandteil des Kolbens 13 ausgeführten Ringmagneten in Form eines permanentmagnetischen Körpers 18.

Der Kolben 13 ist eine aus mehreren Komponenten zusammengesetzte Baueinheit und kann auch im nicht an einer Kolbenstange 8 montierten Zustand wie ein einziges Bauteil gehandhabt werden. Die Montage des Kolbens 13 auf einer Kolbenstange 8 geschieht also als Ganzes und nicht in Form von Einzelteilen, die sich erst bei der Montage zu einem Kolben ergänzen.

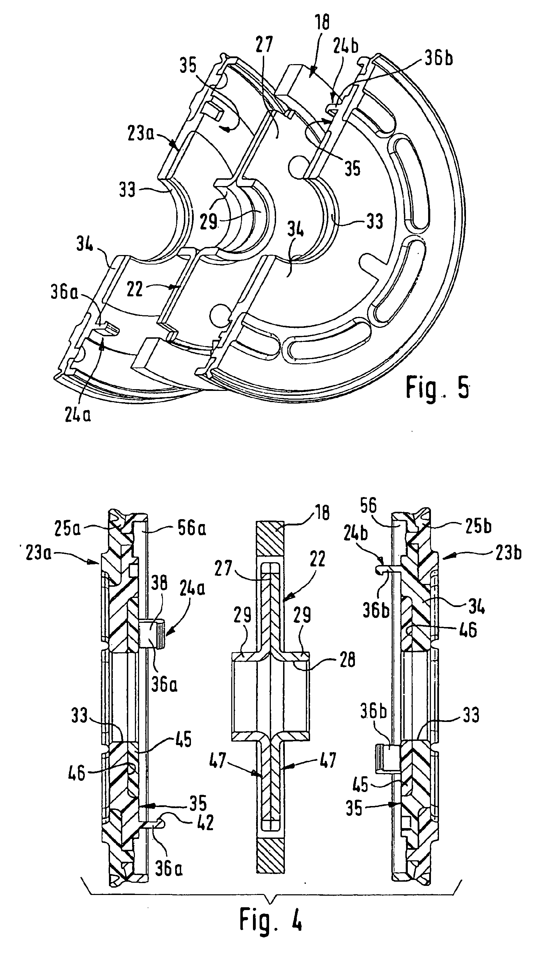

Wie insbesondere auch aus Figuren 4 und 5 ersichtlich ist, beinhaltet der beispielhafte Kolben 13 einen zentral angeordneten Metallkern 22, den schon angesprochenen, den Metallkern 22 konzentrisch umschließenden permanentmagnetischen Ringkörper 18, sowie zwei zueinander koaxiale, gemeinsam den Metallkern 22 und den Ringkörper 18 umschließende Kolbenelemente 23a, 23b, von denen jedes wenigstens teilweise und vorzugsweise zur Gänze aus Kunststoffmaterial besteht. Die Kolbenelemente 23a, 23b sind mittels einer an ihnen jeweils vorgesehenen Verrastungseinrichtung 24a, 24b unabhängig voneinander von einander entgegengesetzten Seiten her koaxial auf den Metallkern 22 aufgesetzt und mit diesem durch Verrastung axial unbeweglich verbunden. Dabei wird der gesamte Metallkern 22 durch die eine Verrastungseinrichtung 24a am zugeordneten einen Kolbenelement 23a und durch die andere Verrastungseinrichtung 24b am anderen Kolbenelement 23b gehalten. Der Metallkern 22 fungiert mithin als Verbindungsglied zwischen den beiden Kolbenelementen 23a, 23b, indem er diese axial zusammenhält. Eine direkte Halteverbindung zwischen den beiden Kolbenelementen 23a, 23b liegt nicht vor.

Bei der Montage kann insbesondere so vorgegangen werden, dass zunächst ein Kolbenelement 23a auf den Metallkern 22 aufgerastet wird, so dass diese beiden Komponenten eine zusammenhaltende Baugruppe bilden, worauf in einem weiteren Schritt das andere Kolbenelement 23b an dem bereits fixierten Metallkern 22 angebracht wird. Vor der Installation des zweiten Kolbenelementes 23b wird allerdings noch der permanentmagnetische Ringkörper 18 eingefügt, der prinzipiell auch schon in einem vorausgegangenen Montageschritt an einem der beiden Kolbenelemente fixiert worden sein kann.

Zweckmäßigerweise liegen die auf den Metallkern 22 aufgesetzten Kolbenelemente 23a, 23b im Bereich des Außenumfanges des Metallkerns 22 in axialer Richtung aneinander an. Sie bilden vorzugsweise eine den Metallkern 22 am Außenumfang umschließende Umhüllung.

Beim Ausführungsbeispiel sind beide Kolbenelemente 23a, 23b im radial außen liegenden Bereich mit einer ringförmigen Kolbendichtung 25a, 25b ausgestattet. Diese Kolbendichtungen 25a, 25b liegen bei zusammengebautem Arbeitszylinder 1, bevorzugt mit einer Dichtlippe, an der von der Innenfläche des Zylinderrohres 4 definierten zylindrischen Kolbenlauffläche 26 dynamisch dichtend an und verhindert einen Fluidübertritt zwischen den beiden Zylinderkammern 14a, 14b.

Der in Figur 1 gezeigte Arbeitszylinder 1 ist von doppeltwirkender Art. Er kann im Betrieb von beiden Axialseiten her mit Druckmedium beaufschlagt werden. Bei einer Variante für einen einfachwirkenden Arbeitszylinder 1 kann die Kolbendichtung an einem der beiden Kolbenelemente 23a, 23b entfallen.

Der Metallkern 22 fungiert als tragendes Element des Kolbens 13. Er besteht bevorzugt aus Stahl ausreichender Festigkeit, wobei insbesondere ein Chrom-Nickel-Stahl verwendet wird. Derartiges Material ist nichtmagnetisierbar und kann somit die Funktionsfähigkeit des permanentmagnetischen Ringkörpers 18 nicht beeinträchtigen, der den Metallkern 22 mit nur geringem radialen Abstand konzentrisch umschließt.

Der Metallkern 22 ist an zentraler Stelle unter Bildung eines axialen Durchgangsloches 28 gelocht. Bei der Montage wird der Kolben 13 mit diesem Durchgangsloch 28 auf einen zylindrischen Befestigungsabschnitt 32 der Kolbenstange 8 aufgesteckt. Insgesamt besitzt der Metallkern 22 einen zentral gelochten, scheibenförmigen Mittelabschnitt 27, von dem koaxial beidseits je ein Buchsenabschnitt 29 wegragt.

Die beiden Kolbenelemente 23a, 23b besitzen jeweils eine zentrale axiale Durchbrechung 33. Beim axialen Zusammenbau der Kolbenkomponenten taucht je ein Buchsenabschnitt 29, bevorzugt in zentrierender Weise, in die Durchbrechung 33 des axial benachbarten Kolbenelementes 23a, 23b ein, das mithin bezüglich dem Metallkern 22 eine stabile radiale Abstützung erfährt.

Die axiale Aufstecktiefe der Kolbenelemente 23a, 23b bezüglich dem Metallkern 22 wird durch den Mittelabschnitt 27 begrenzt, an dem die Kolbenelemente 23a, 23b zur Anlage gelangen.

Jedes Kolbenelement 23a, 23b besitzt einen aus stabilem Kunststoffmaterial bestehenden scheibenförmigen, unter Bildung der zugeordneten Durchbrechung 33 zentral gelochten scheibenförmigen Grundkörper 34. Dieser ist mit der zugehörigen Kolbendichtung 25a, 25b bestückt, und zwar insbesondere durch Anformen derselben mittels eines Zwei-Komponenten-Spritzgießverfahrens. Auf diese Weise ergibt sich eine stoffschlüssige, innige Verbindung zwischen dem gummielastischen Material der Kolbendichtung 25a, 25b und dem relativ harten Material des zugehörigen Grundkörpers 34.

Die oben erwähnten Verrastungseinrichtungen 24a, 24b sind am jeweils zugehörigen Grundkörper 34 einstückig ausgebildet. Sie befinden sich an der dem jeweils anderen Kolbenelement 23a, 23b axial zugewandten Innenfläche 35 des jeweiligen Grundkörpers, wobei sie jeweils mehrere um das Zentrum des zugeordneten Kolbenelementes 23a, 23b herum vereilte Rasthaken 36a, 36b aufweisen, die sich jeweils axial in Richtung des anderen Kolbenelementes erstrecken.

Im montierten Zustand wird jeweils ein Abschnitt 37 des Metallkerns 22 von jeweils einem der Rasthaken 36a, 36b axial hintergriffen. Hierzu besitzen die Rashaken 36a, 36b jeweils einen an einem vom zugeordneten Grundkörper 34 axial wegragenden Stegabschnitt 38 angeformten und nach radial innen ragenden hakenartigen Rastvorsprung 42. Im aufgerasteten Zustand ist der gesamte Metallkern 22 an jedem Kolbenelement 23a, 23b unabhängig vom jeweils anderen Kolbenelement dadurch gehalten, dass er zwischen der axialen Innenfläche 35 und den Rastvorsprüngen 42 axial unbeweglich fixiert ist.

Die Rasthaken 36a, 36b sind bevorzugt so angeordnet, dass sie bei zusammengebautem Kolben 13 radial außen am Mittelabschnitt 27 des Metallkerns 22 vorbeigreifen. Bevorzugt weist der Metallkern 22 an seinem Mittelabschnitt 27 entlang des Außenumfanges verteilte Aussparungen 43 auf, durch die dabei jeweils ein Rasthaken 36a, 36b mit seinem Stegabschnitt 38 hindurchgreift. Ein jeweiliger Rasthaken 36a, 36b ist somit zwischen den beiden seitlichen Flanken der von ihm durchgriffenen Aussparung 43 in der Umfangsrichtung fixiert und man erreicht dadurch eine verdrehgesicherte Rastverbindung zwischen dem Metallkern 25 und einem jeweiligen Kolbenelement 23a, 23b.

Die Stegabschnitte 38 verleihen einem jeweiligen Rasthaken 36a, 36b die notwendige Biegeelastizität für den Rastvorgang. Die Rastvorsprünge 42 hintergreifen den Mittelabschnitt 27 axial im Anschluss an die jeweils zugeordnete Aussparung 43, wobei der entsprechende Randabschnitt des Metallkerns 22 den erwähnten hintergriffenen Abschnitt 37 bildet.

Die Kolbenelemente 23a, 23b sind so am Metallkern 22 fixiert, dass die beiderseitigen Rasthaken 36a, 36b in der Umfangsrichtung des Kolbens versetzt zueinander angeordnet sind. Es empfiehlt sich die aus der Zeichnung ersichtliche Ausgestaltung, bei der sich Rasthaken 36a, 36b der beiden Kolbenelemente 23a, 23b in der Kolbenumfangsrichtung abwechseln. Gezeigt ist eine Bauform mit je drei an einem Grundkörper 34 einstückig angeformten Rasthaken 36a, 36b, die unter einem Bogenwinkel von 120° beabstandet zueinander platziert sind. Im zusammengebauten Zustand liegt je ein Rasthaken 36a des einen Kolbenelementes 23a mittig zwischen zwei benachbarten Rasthaken 36b des anderen Kolbenelementes 23b. Durch die versetzte Anordnung wird erreicht, dass sich die beiderseitigen Rasthaken 36a, 36b nicht axial gegenüberliegen und mithin nicht behindern, so dass sich der Kolben 13 mit geringen Längenabmessungen realisieren lässt.

Begünstigt wird die kurze Baulänge beim Ausführungsbeispiel auch noch dadurch, dass die Kolbenelemente 23a, 23b an den einander zugewandten axialen Innenflächen 35 ihrer Grundkörper 34 axial gegenüberliegend einem jeweiligen Rasthaken 36a, 36b des jeweils anderen Kolbenelementes 23a, 23b axiale Vertiefungen 44 aufweisen. Sie sind in der Lage, den stirnseitigen Endabschnitt des jeweils axial gegenüberliegenden Rasthakens 36a, 36b aufzunehmen. Mit anderen Worten taucht jeder Rasthaken 36a, 36b mit seiner Stirnseite in eine gegenüberliegende axiale Vertiefung 44 des anderen Kolbenelementes 23a, 23b ein.

Im miteinander verrasteten Zustand liegen die Kolbenelemente 23a, 23b jeweils mit Dichtkontakt axial am Metallkern 22 an. Hierzu ist an die axiale Innenfläche 35 eines jeweiligen Grundkörpers 34 entlang des Randes der Durchbrechung 33 eine zu der Durchbrechung 33 konzentrische gummielastische Dichtscheibe 45 angeformt. Beim Ausführungsbeispiel sitzt sie in einer nach radial innen zur Durchbrechung 33 hin offenen ringförmigen Vertiefung 46 des Grundkörpers 34 und ragt geringfügig über die axial orientierte Innenfläche 35 vor, so dass sie unter axialer Vorspannung an der axial zugewandten Stirnfläche 47 des Metallkerns 22 zur Anlage gelangt.

Zweckmäßigerweise besteht die Dichtscheibe 45 aus dem gleichen gummielastischen Material wie die am zugeordneten Grundkörper 34 angebrachte Kolbendichtung 25a, bzw. 25b. Dies vereinfacht die Herstellung, weil die beiden gummielastischen Komponenten beim Spritzgießen in einem Arbeitsgang gemeinsam an den Grundkörper 34 angeformt werden können. In diesem Zusammenhang liegt beim Ausführungsbeispiel zwischen den beiden Flächen eines jeweiligen Grundkörpers 34, an denen zum einen eine Kolbendichtung 25a, 25b und zum anderen eine Dichtscheibe 45 anzuformen ist, mindestens ein den Grundkörper 34 durchsetzender Verbindungskanal 48 vor, durch den das fließfähige Elastomermaterial hindurchtreten kann.

Die beiden Kolbendichtungen 25a, 25b sind beim Ausführungsbeispiel jeweils einstückiger Bestandteil eines Elastomerkörpers 52, der in einer ringförmigen Vertiefung 53 sitzt, welche an der dem jeweils anderen Kolbenelement 23a, 23b axial abgewandten axialen Außenfläche 54 eines jeweiligen Grundkörpers 34 ausgebildet ist und die nach radial außen hin offen ist. In diesem äußeren Bereich ist die Kolbendichtung 25a, 25b ausgebildet. Der Elastomerkörper 52 definiert beim Ausführungsbeispiel zusätzlich axial vom Kolben weg ragende Puffervorsprünge 55, die in den Hubendlagen des Kolbens 13 den Aufprall an den Deckeln 5, 6 mindern.

Der permanentmagnetische Ringkörper 18 ist zwischen den beiden Kolbenelementen 23a, 23b aufgenommen und nach außen hin schützend abgeschirmt. Im Einzelnen sind an den axialen Innenflächen 35 der beiden Grundkörper 34 zwei sich axial gegenüberliegende Ringnuten 56a, 56b mit identischer Gestaltung ausgebildet, die mit gleichem Radialabstand zur Längsachse 16 angeordnet sind und deren Öffnungen zueinander weisen. Bei zusammengebautem Kolben 13 ergänzen sich diese beiden Ringnuten 56a, 56b zu einem zum Metallkern 22 koaxialen, ringförmigen Aufnahmeraum 57, der mit dem permanentmagnetischen Ringkörper 18 bestückt ist. Bei der Montage wird der Ringkörper 18 in eine der Ringnuten 56a oder 56b eingelegt, bevor die beiden Kolbenelemente 23a, 23b axial zusammengesetzt werden.

Der permanentmagnetische Ringkörper 18 ist im Aufnahmeraum 57 durch die radialen Flanken der Ringnuten 56a, 56b fixiert und zentriert. Er liegt zweckmäßigerweise in einer gemeinsamen Radialebene mit dem Mittelabschnitt 27 des Metallkerns 22, den er mit geringem radialem Abstand konzentrisch umschließt.

Um eine exakte Positionserfassung zu erhalten, ist der permanentmagnetische Ringkörper 18 innerhalb des Aufnahmeraumes 57 axial spielfrei und dennoch stoßunempfindlich fixiert. Hierzu sind an der axial dem jeweils anderen Kolbenelement zugewandten Grundfläche 58 einer jeweiligen Ringnut 56a, 56b mehrere in der Umfangsrichtung der Ringnut 56a, 56b verteilte gummielastische Pufferelemente 62 vorgesehen, die ein Stück weit axial in die betreffende Ringnut 56a, 56b hineinragen. Zwischen den beiderseitigen Pufferelementen 62 ist der Ringkörper 18 axial federelastisch eingespannt.

Zur einfachen Realisierung der Pufferelemente 62 sind sie beim Ausführungsbeispiel einstückiger Bestandteil des am gleichen Grundkörper 34 angeordneten Elastomerkörpers 52 und der zugeordneten Kolbendichtung 25a, 25b. Der Grundkörper 34 ist in Umfangsrichtung verteilt mit mehreren axialen Durchgangskanälen 63 versehen, die einenends zu der äußeren ringförmigen Vertiefung 53 und andernends zur Grundfläche 58 der zugeordneten Ringnut 56a, 56b ausmünden. Beim Anspritzen des Elastomerkörpers 52 dringt das Elastomermaterial durch die Durchgangskanäle 63 hindurch und bildet so die Pufferelemente 62.

Der Metallkern 22 könnte ein einstückiges Bauteil sein. Beim Ausführungsbeispiel setzt er sich zu Gunsten einer kostengünstigen Herstellung aus zwei koaxial aneinandergesetzten und fest miteinander verbundenen Teile zusammen, die als Kernelemente 64a, 64b bezeichnet seien. Jedes Kernelement 64 besitzt einen zentral gelochten Scheibenabschnitt 65 und einen der beiden oben erwähnten Buchsenabschnitte 29, der einstückig an den betreffenden Scheibenabschnitt 65 angeformt ist. Die beiden Kernelemente 64a, 64b sind mit ihren den Buchsenabschnitten 29 entgegengesetzten Stirnflächen 66a, 66b unter koaxialer Ausrichtung axial aneinander angesetzt und bevorzugt unlösbar fest zu einer den Metallkern 22 bildenden Baueinheit zusammengefügt.

Die Fügeverbindung ist insbesondere eine Schweißverbindung. Exemplarisch ist eine Punktschweißverbindung gezeigt, deren punktförmige Schweißstellen bei 67 angedeutet sind und die zwischen den beiden Scheibenabschnitten 65 vorgesehen ist. Möglich wäre beispielsweise auch eine Laserschweißverbindung mit einer radial außen im Fügebereich zwischen den beiden Scheibenabschnitten 65 ringsum laufenden Schweißnaht, die im Bereich der Aussparungen 43 unterbrochen sein kann.

Zur Bildung der Aussparungen 43 verfügt jedes Kernelement 64a, 64b an der Peripherie ihres Scheibenabschnittes 65 über in Umfangsrichtung verteilte Aussparungsabschnitte 43a bzw. 43b, die sich im zusammengesetzten Zustand der Kernelemente 64a, 64b unter fluchtender Ausrichtung zu den Aussparungen 43 ergänzen.

Um das Zusammensetzen der Kernelemente 64a, 64b zu erleichtern, ist beim Ausführungsbeispiel vorgesehen, dass die zusammengesetzten Kernelemente 64a, 64b formschlüssig unter gegenseitiger Verdrehsicherung axial ineinander greifen. Jedes Kernelement 64a, 64b kann hierzu an seiner Stirnfläche 66a, bzw. 66b mindestens einen axialen Vorsprung 72 und mindestens eine, bevorzugt an diametral gegenüberliegender Stelle platzierte Aussparung 73 aufweisen. Beim axialen Zusammensetzen greift der Vorsprung 72 des jeweils einen Kernelementes in die Aussparung 73 des jeweils anderen Kernelementes ein. Vorsprung 72 und Aussparung 73 befinden sich zweckmäßigerweise wie die Aussparungsabschnitte am äußeren Rand des Scheibenabschnittes 65, wobei der Vorsprung 72 durch eine plastische Verformung des Werkstoffes hergestellt sein kann.

Bei beiden Kernelementen 64a, 64b handelt es sich zweckmäßigerweise um aus Metall und vorzugsweise aus Stahl bestehende Stanzbiegeteile. Sie können jeweils aus einer Metallplatte ausgestanzt und unter plastischer Verformung in die gewünschte Endform gebracht sein.

Ist eine Positionserfassung nicht beabsichtigt, kann der ringförmige Aufnahmeraum 57 leer bleiben. Bevorzugt wird er in diesem Fall allerdings mit einem in seiner äußeren Gestaltung derjenigen des permanentmagnetischen Ringkörpers 18 entsprechenden unmagnetischen Ringkörper bestückt, der aus Metall oder Kunststoffmaterial besteht. In allen Fällen wird durch den eingesetzten Ringkörper eine Versteifung des Kolbens 13 herbeigeführt.

Die Grundkörper 34 können wie abgebildet im Wesentlichen schalenförmig gestaltet sein. Radial außen können sie axial zwischen den beiden Kolbendichtungen 25a, 25a gemeinsam eine zylindrische Führungsfläche 68 für das Zusammenwirken mit der Kolbenlauffläche 26 definieren. Insbesondere unmittelbar im Fügebereich kann die Führungsfläche 68 eine als Fetttasche fungierende ringsum laufende Vertiefung 74 aufweisen.

Die Gestaltung der Rasthaken 36a, 36b ist so auf den Metallkern 22 abgestimmt, dass sich eine axial spielfreie Rastverbindung zwischen einem jeweiligen Kolbenelement 23a, 23b und dem Metallkern 22 einstellt. Die über die Puffervorsprünge 55 in die Kolbenelemente 23a, 23b eingeleitete Aufprallenergie wird unter Umgehung des Ringkörpers 18 direkt in den Metallkern 22 eingeleitet und von dort an die Kolbenstange 8 abgegeben.

Eine bevorzugte Befestigungsart sieht vor, dass der Kolben 13 auf einen Befestigungsabschnitt 32 der Kolbenstange 8 aufgesteckt wird und darauf zwischen einer Ringstufe 75 der Kolbenstange 8 und einem Befestigungselement 76 axial unbeweglich eingespannt ist. Das Befestigungselement 76 kann insbesondere eine aufgeschraubte Befestigungsmutter sein. Der größte Teil der axialen Spannkraft wird über die beiden Buchsenabschnitte 29 in den Metallkern 22 eingeleitet und von diesem aufgenommen. Die bevorzugt ausschließlich aus Kunststoffmaterial bestehenden Kolbenelemente 23a, 23b sind somit nur wenig beansprucht. Der Berührkontakt zwischen dem Material der Grundkörper 34 und der Kolbenstange 8 sowie dem Befestigungselement 76 kann eine Dichtfunktion erfüllen.

Zur Realisierung von Kolben der erfindungsgemäßen Art können Kolbenelemente 23a, 23b unterschiedlicher Spezifikation bereitgehalten werden, die unmittelbar vor dem Zusammenbau eines Arbeitszylinders anwendungsspezifisch kombiniert und zusammengebaut werden. Auf diese Weise können sehr einfach und flexibel Kolben mit unterschiedlichen Eigenschaften und mit unterschiedlicher Ausstattung realisiert werden, beispielsweise mit oder ohne Ringmagnet, mit mehr oder weniger hochwertigen Materialien, mit nur einer oder mit zwei Kolbendichtungen und auch mit unterschiedlicher Farbgebung zur Kennzeichnung der verschiedenen Ausstattungsvarianten.

Einschließlich des Ringkörpers, sei er permanentmagnetisch oder unmagnetisch, lässt sich der beispielhafte Kolben nach entsprechender Vorfertigung seiner Komponenten aus insgesamt nur vier Teilen zusammensetzen, als da sind der erwähnte Ringkörper, der Metallkern und die beiden bevorzugt schalenförmigen Kolbenelemente 23a, 23b. Für den Zusammenbau sind keine separaten Befestigungselemente notwendig, da die gesamte Baugruppe durch Rastverbindungen zusammengehalten wird, die zweckmäßigerweise unter normalen Umständen zerstörungsfrei nicht mehr gelöst werden kann.

Innerhalb der einzelnen Kolbenelemente 23a, 23b liegt bei den unterschiedlichen Kunststoffmaterialien ein zuverlässiger Haftverbund vor. Die Materialien können in einer einzigen Gießform zusammen gespritzt werden.

Sowohl die beiden Kolbenelemente 23a, 23b als auch die beiden Kernelemente 64a, 64b sind untereinander zweckmäßigerweise als Gleichteile ausgeführt. Für die Herstellung benötigt man daher nur ein einziges Werkzeug.

## Patentansprüche

1. Kolben für einen Arbeitszylinder, mit zwei zueinander koaxialen, gemeinsam einen Metallkern (22) des kolbens umschließenden und wenigstens teilweise aus Kunststoffmaterial bestehenden Kolbenelementen (23a, 23b), von denen wenigstens eines eine radial außen angeordnete ringförmige Kolbendichtung (25a, 25b) aufweist, **dadurch gekennzeichnet, dass** die beiden Kolbenelemente (23a, 23b) mittels einer an ihnen jeweils vorgesehenen Verrastungseinrichtung (24a, 24b) unabhängig voneinander von entgegengesetzten Seiten her koaxial auf den Metallkern (22) aufgerastet sind, wobei durch jede der beiden Verrastungseinrichtungen (24a, 24b) der gesamte Metallkern (22) am jeweiligen Kolbenelement (23a, 23b) gehalten ist, so dass die Kolbenelemente (23a, 23b) durch den Metallkern (22) als Verbindungsglied axial zusammengehalten werden.

2. Kolben nach Anspruch 1, **dadurch gekennzeichnet, dass** beide Kolbenelemente (23a, 23b) mit einer Kolbendichtung (25a, 25b) ausgestattet sind.

3. Kolben nach Anspruch 1 oder 2, **dadurch gekennzeichnet, dass** jedes Kolbenelement (23a, 23b) einen aus Kunststoffmaterial bestehenden scheibenförmigen Grundkörper (34) aufweist, an dem die zugeordnete Verrastungseinrichtung (24a, 24b) einstückig ausgebildet ist.

4. Kolben nach Anspruch 3, **dadurch gekennzeichnet, dass** die Kolbendichtung (25a, 25b) ein durch Spritzgießen an den Grundkörper (34) angeformtes Bauteil ist.

5. Kolben nach Anspruch 3 oder 4, **dadurch gekennzeichnet, dass** an den einander axial zugewandten Innenflächen (35) der Grundkörper (34) jeweils eine gummielastische Dichtscheibe (45) angeformt ist, die am Metallkern (22) dichtend anliegt und die zweckmäßigerweise einstückig mit der zugeordneten Kolbendichtung (25a, 25b) verbunden ist.

6. Kolben nach einem der Ansprüche 1 bis 5, **dadurch gekennzeichnet, dass** die beiden Kolbenelemente (23a, 23b) zwischen sich einen den Metallkern (22) konzentrisch umschließenden, ringförmigen Aufnahmeraum (57) definieren, der einen permanentmagnetischen oder unmagnetischen Ringkörper (18) aufnimmt.

7. Kolben nach Anspruch 6 in Verbindung mit einem der Ansprüche 3 bis 5, **dadurch gekennzeichnet, dass** die beiden Grundkörper (34) an den einander axial zugewandten Innenflächen (35) je eine zum jeweils anderen Grundkörper hin offene Ringnut (56a, 56b) aufweisen, in der der Ringkörper (18) in zentrierter Weise einsitzt.

8. Kolben nach Anspruch 7, **dadurch gekennzeichnet, dass** an der axial orientierten Grundfläche (58) der beiden Ringnuten (56a, 56b) mehrere entlang des Nutumfanges verteilte und jeweils ein Stück weit axial in die Ringnut (56a, 56b) hineinragende gummielastische Pufferelemente (62) vorgesehen sind, zwischen denen der Ringkörper (18) elastisch eingespannt ist und die zweckmäßigerweise jeweils einstückig mit der am gleichen Grundkörper (34) angeordneten Kolbendichtung (25a, 25b) ausgebildet sind und axiale Durchgangskanäle (63) des betreffenden Grundkörpers (34) durchsetzen.

9. Kolben nach einem der Ansprüche 1 bis 8, **dadurch gekennzeichnet, dass** die Verrastungseinrichtungen (24a, 24b) jeweils mehrere um das Zentrum des zugeordneten Kolbenelementes (23a, 23b) herum verteilt angeordnete, in Richtung zum jeweils anderen Kolbenelement (23b, 23a) ragende Rasthaken (36a, 36b) aufweisen, die jeweils einen Abschnitt (37) des Metallkerns (22) axial hintergreifen.

10. Kolben nach Anspruch 9, **dadurch gekennzeichnet, dass** die Rasthaken (36a, 36b) radial außen am Metallkern (22) vorbeigreifen.

11. Kolben nach Anspruch 10, **dadurch gekennzeichnet, dass** der Metallkern (22) entlang seines Außenumfanges verteilte Aussparungen (43) aufweist, durch die jeweils ein Rasthaken (36a, 36b) hindurchgreift.

12. Kolben nach einem der Ansprüche 9 bis 11, **dadurch gekennzeichnet, dass** die Rasthaken (36a, 36b) der beiden Verrastungseinrichtungen (24a, 24b) in der Umfangsrichtung des Kolbens versetzt zueinander angeordnet sind, insbesondere in abwechselnder Reihenfolge.

13. Kolben nach Anspruch 12, **dadurch gekennzeichnet, dass** die Kolbenelemente (23a, 23b) an den einander axial zugewandten Innenflächen (35) axiale Vertiefungen (44) aufweisen, in die jeweils ein am anderen Kolbenelement (23b, 23a) angeordneter Rasthaken (36a, 36b) stirnseitig eintauchen kann.

14. Kolben nach einem der Ansprüche 1 bis 13, **dadurch gekennzeichnet, dass** der Metallkern (22) zentral ein axiales Durchgangsloch (28) aufweist.

15. Kolben nach einem der Ansprüche 1 bis 14, **dadurch gekennzeichnet, dass** der Metallkern (22) einen zentral gelochten, scheibenförmigen Mittelabschnitt (27) aufweist, der mit den Verrastungseinrichtungen (24a, 24b) beider Kolbenelemente (23a, 23b) zusammenwirkt.

16. Kolben nach Anspruch 15, **dadurch gekennzeichnet, dass** koaxial beidseits von dem Mittelabschnitt (27) jeweils ein Buchsenabschnitt (29) wegragt, der, insbesondere zentrierend, in eine zentrale Durchbrechung (33) des zugewandten Kolbenelementes (23a, 23b) eintaucht.

17. Kolben nach einem der Ansprüche 1 bis 16, **dadurch gekennzeichnet, dass** der Metallkern (22) aus zwei koaxial aneinandergesetzten, insbesondere identischen und zweckmäßigerweise jeweils als Stanzbiegeteile ausgebildeten Kernelementen (64a, 64b) besteht.

18. Kolben nach Anspruch 17, **dadurch gekennzeichnet, dass** jedes Kernelement (64a, 64b) einen zentral gelochten Scheibenabschnitt (65) und einen einstückig daran angeformten Buchsenabschnitt (29) aufweist, wobei die Kernelemente (64a, 64b) mit ihren Scheibenabschnitten (65) axial aneinander angesetzt sind.

19. Kolben nach Anspruch 17 oder 18, **dadurch gekennzeichnet, dass** die Kernelemente (64a, 64b) formschlüssig unter gegenseitiger Verdrehsicherung axial ineinander greifen.

20. Kolben nach einem der Ansprüche 17 bis 19, **dadurch gekennzeichnet, dass** die beiden Kernelemente (64a, 64b), insbesondere durch eine Schweißverbindung, fest zu einer den Metallkern (22) bildenden Baueinheit zusammengefügt sind.

21. Kolben nach einem der Ansprüche 1 bis 20, **dadurch gekennzeichnet, dass** der Metallkern (22) aus nichtmagnetisierbarem Metall besteht, insbesondere einem Chrom-Nickel-Stahl.

## Claims

1. Piston for an operating cylinder, with two coaxial piston elements (23a, 23b) jointly enclosing a metal core (22) of the piston and being at least partially made of a plastic material, at least one of them being provided with an annular piston seal (25a, 25b) disposed radially on the outside, **characterised in that** the two piston elements (23a, 23b) are independently locked coaxially to the metal core (22) from opposite sides by means of locking devices (24a, 24b) provided on said elements, wherein the entire metal core (22) is held on the respective piston element (23a, 23b) by each of the two locking devices (24a, 24b), so that the piston elements (23a, 23b) are axially held together by the metal core (22) acting as a connecting link.

2. Piston according to claim 1, **characterised in that** both piston elements (23a, 23b) are provided with a piston seal (25a, 25b).

3. Piston according to claim 1 or 2, **characterised in that** each of the piston elements (23a, 23b) has a disc-shaped base body (34) made of a plastic material, with which the locking device (24a, 24b) is integrated.

4. Piston according to claim 3, **characterised in that in that** the piston seal (25a, 25b) is a component formed integrally with the base body (34) by injection moulding.

5. Piston according to claim 3 or 4, **characterised in that** a rubber-elastic sealing ring (45), which bears against the metal core (22) while forming a seal and which is expediently joined integrally to the associated piston seal (25a, 25b), is formed integrally with each of the axially adjacent inner surfaces (35) of the base bodies (34).

6. Piston according to any of claims 1 to 5, **characterised in that** the two piston elements (23a, 23b) define between themselves an annular location (57) concentrically enclosing the metal core (22) and accommodating a permanent-magnetic or non-magnetic annular body (18).

7. Piston according to claim 6 in conjunction with any of claims 3 to 5, **characterised in that** each of the two base bodies (34) has on the axially adjacent inner surfaces (35) an annular groove (56a, 56b) open towards the other base body, in which groove the annular body (18) is centred.

8. Piston according to claim 7, **characterised in that** several rubber-elastic buffer elements (62) distributed along the circumference of the grooves and axially projecting into the annular grooves (56a, 56b) to some extent are provided on the axially oriented base surface (58) of the two annular grooves (56a, 56b), between which buffer elements the annular body (18) is elastically clamped and each of which buffer elements is expediently integrated with the piston seal (25a, 25b) provided on the same base body (34) and passes through axial through passages (63) of the respective base body (34).

9. Piston according to any of claims 1 to 8, **characterised in that** each of the locking devices (24a, 24b) is provided with several locking hooks (36a, 36b) distributed around the centre of the associated piston element (23a, 23b) and projecting towards the other piston element (23a, 23b) while axially engaging a section (37) of the metal core (22) from behind.

10. Piston according to claim 9, **characterised in that** the locking hooks (36a, 36b) radially extend past the outside of the metal core (22).

11. Piston according to claim 10, **characterised in that** the metal core (22) has recesses (43) through each of which a locking hook (36a, 36b) passes distributed along its outer circumference.

12. Piston according to any of claims 9 to 11, **characterised in that** the locking hooks (36a, 36b) of the two locking devices (24a, 24b) are offset relative to one another in the circumferential direction of the piston, in particular in an alternating formation.

13. Piston according to claim 12, **characterised in that** the piston elements (23a, 23b) are provided with axial indentations (44) into which a locking hook (36a, 36b) provided on the other piston element (23a, 23b) can dip with its end face on their axially adjacent inner surfaces (35).

14. Piston according to any of claims 1 to 13, **characterised in that** the metal core (22) has a central axial through hole (28).

15. Piston according to any of claims 1 to 14, **characterised in that** the metal core (22) has a centrally perforated disc-shaped middle section (27) acting together with the locking devices (24a, 24b) of both piston elements (23a, 23b).

16. Piston according to claim 15, **characterised in that** a sleeve section (29) axially projects from the middle section (27) on each side, which sleeve section dips, in particular in a centring manner, into a central aperture (33) of the adjacent piston element (23a, 23b).

17. Piston according to any of claims 1 to 16, **characterised in that** the metal core (22) comprises two core elements (64a, 64b) coaxially fitted to one another, which are in particular identical and expediently designed as stamped and bent parts.

18. Piston according to claim 17, **characterised in that** each core element (64a, 64b) comprises a central perforated disc section (65) and a sleeve section (29) integrated therewith, the core elements (64a, 64b) being axially fitted together by their disc sections (65).

19. Piston according to claim 17 or 18, **characterised in that** the core elements (64a, 64b) positively engage one another axially while securing one another against rotation.

20. Piston according to any of claims 7 to 19, **characterised in that** the two core elements (64a, 64b) are permanently joined together, in particular by welding, to produce a component representing the metal core (22).

21. Piston according to any of claims 1 to 20, **characterised in that** the metal core (22) is made of a non-magnetisable material, in particular of a chromium-nickel steel.

## Revendications

1. Piston pour un vérin, avec deux éléments de piston (23a, 23b) mutuellement coaxiaux entourant en commun une âme métallique (22) du piston et constitués au moins partiellement d'une matière synthétique, dont au moins l'un présente un joint de piston (25a, 25b) annulaire disposé à l'extérieur radialement, **caractérisé en ce que** les deux éléments de piston (23a, 23b) sont encliquetés sur l'âme métallique (22) de manière coaxiale indépendamment l'un de l'autre et depuis des côtés opposés au moyen d'un dispositif d'encliquetage (24a, 24b) prévu sur chacun d'eux, toute l'âme métallique (22) étant tenue par chacun des deux dispositifs d'encliquetage (24a, 24b) sur l'élément de piston (23a, 23b) respectif, de sorte que les éléments de piston (23a, 23b) sont tenus ensemble axialement par l'âme métallique (22) servant d'organe de jonction.

2. Piston selon la revendication 1, **caractérisé en ce que** les deux éléments de piston (23a, 23b) sont munis d'un joint de piston (25a, 25b).

3. Piston selon la revendication 1 ou 2, **caractérisé en ce que** chaque élément de piston (23a, 23b) présente un corps de base (34) en forme de disque constitué de matière synthétique, sur lequel le dispositif d'encliquetage (24a, 24b) associé est réalisé d'un seul tenant.

4. Piston selon la revendication 3, **caractérisé en ce que** le joint de piston (25a, 25b) est une pièce formée par moulage par injection sur le corps de base (34).

5. Piston selon la revendication 3 ou 4, **caractérisé en ce que** sur les surfaces intérieures (35) des corps de base (34) axialement en vis-à-vis est formé à chaque fois un disque d'étanchéité ayant l'élasticité du caoutchouc (45), qui s'appuie hermétiquement contre l'âme métallique (22) et qui est relié, de manière avantageuse d'un seul tenant, au joint de piston associé (25a, 25b).

6. Piston selon l'une des revendications 1 à 5, **caractérisé en ce que** les deux éléments de piston (23a, 23b) définissent entre eux un logement (57) annulaire entourant concentriquement l'âme métallique (22), logement qui reçoit un corps annulaire (18) magnétique permanent ou non magnétique.

7. Piston selon la revendication 6 en liaison avec l'une des revendications 3 à 5, **caractérisé en ce que** les deux corps de base (34) présentent sur les surfaces intérieures (35) mutuellement en vis-à-vis axialement chacun une rainure annulaire (56a, 56b) ouverte en direction de l'autre corps de base, dans laquelle le corps annulaire (18) se place de manière centrée.

8. Piston selon la revendication 7, **caractérisé en ce que** sur la surface de fond (58) orientée axialement des deux rainures annulaires (56a, 56b) sont prévus plusieurs éléments tampons (62) élastiques répartis sur la circonférence de la rainure et dépassant chacun d'une certaine distance axiale dans la rainure annulaire (56a, 56b), éléments entre lesquels le corps de base (18) est serré élastiquement et qui sont réalisés avantageusement chacun d'un seul tenant avec le joint de piston (25a, 25b) placé sur le même corps de base (34) et traversent des canaux de passage axiaux (63) du corps de base (34) concerné.

9. Piston selon l'une des revendications 1 à 8, **caractérisé en ce que** les dispositifs d'encliquetage (24a, 24b) présentent chacun plusieurs crochets d'encliquetage (36a, 36b) répartis autour du centre de l'élément de piston (23a, 23b) associé et faisant saillie en direction de l'autre élément de piston (23b, 23a) respectif, crochets qui saisissent chacun axialement par l'arrière une section (37) de l'âme métallique (22).

10. Piston selon la revendication 9, **caractérisé en ce que** les crochets d'encliquetage (36a, 36b) se mettent en prise radialement à l'extérieur sur l'âme métallique (22).

11. Piston selon la revendication 10, **caractérisé en ce que** l'âme métallique (22) présente des évidements (43) répartis le long de sa circonférence extérieure, à travers lesquels s'engage à chaque fois un crochet d'encliquetage (36a, 36b).

12. Piston selon l'une des revendications 9 à 11, **caractérisé en ce que** les crochets d'encliquetage (36a, 36b) des deux dispositifs d'encliquetage (24a, 24b) sont placés décalés l'un par rapport à l'autre dans la direction circonférentielle du piston, en particulier selon une séquence alternée.

13. Piston selon la revendication 12, **caractérisé en ce que** les éléments de piston (23a, 23b) présentent, sur les surfaces intérieures (35) mutuellement en vis-à-vis axialement, des renfoncements axiaux (44) dans lesquels peut s'enfoncer à chaque fois frontalement un crochet d'encliquetage (36a, 36b) placé sur l'autre élément de piston (23b, 23a).

14. Piston selon l'une des revendications 1 à 13, **caractérisé en ce que** l'âme métallique (22) présente au centre un passage axial (28).

15. Piston selon l'une des revendications 1 à 14, **caractérisé en ce que** l'âme métallique (22) présente une section médiane (27) en forme de disque percée en son centre, qui coopère avec les dispositifs d'encliquetage (24a, 24b) des deux éléments de piston (23a, 23b).

16. Piston selon la revendication 15, **caractérisé en ce que** coaxialement des deux côtés de la section médiane (27) dépasse à chaque fois une section en forme de douille (29) qui s'enfonce, en particulier avec effet de centrage, dans une traversée centrale (33) de l'élément de piston (23a, 23b) situé en vis-à-vis.

17. Piston selon l'une des revendications 1 à 16, **caractérisé en ce que** l'âme métallique (22) est constituée de deux éléments d'âme (64a, 64b) rapportés coaxialement l'un contre l'autre, en particulier identiques et avantageusement conformés chacun en pièce estampée-pliée.

18. Piston selon la revendication 17, **caractérisé en ce que** chaque élément d'âme (64a, 64b) présente une section en forme de disque (65) perforée en son centre et une section en forme de douille (29) formée dessus d'un seul tenant, les éléments d'âme (64a, 64b) étant rapportés axialement l'un contre l'autre avec leurs sections de disque (65).

19. Piston selon la revendication 17 ou 18, **caractérisé en ce que** les éléments d'âme (64a, 64b) s'engagent axialement l'un dans l'autre par complémentarité de formes avec immobilisation mutuelle en rotation.

20. Piston selon l'une des revendications 17 à 19, **caractérisé en ce que** les deux éléments d'âme (64a, 64b) sont assemblés rigidement en une unité formant l'âme métallique (22), en particulier par un assemblage soudé.

21. Piston selon l'une des revendications 1 à 20, **caractérisé en ce que** l'âme métallique (22) est constituée d'un métal non magnétisable, en particulier un acier au chrome-nickel.
